**Europäisches Patentamt**

**European Patent Office**

**Office européen des brevets**

(19)

(11) Veröffentlichungsnummer: **0 124 137**
A2

(12) # EUROPÄISCHE PATENTANMELDUNG

(21) Anmeldenummer: **84104999.2**

(22) Anmeldetag: **03.05.84**

(51) Int. Cl.³: **B 02 C 18/14**, B 02 C 18/18

(30) Priorität: **03.05.83 DE 3316142**

(43) Veröffentlichungstag der Anmeldung: **07.11.84**
**Patentblatt 84/45**

(84) Benannte Vertragsstaaten: **AT BE CH DE FR GB IT LI LU NL SE**

(71) Anmelder: **Kalverkamp, Klemens, Possenbrock 29, D-4730 Ahlen/Westfalen (DE)**

(72) Erfinder: **Kalverkamp, Klemens, Possenbrock 29, D-4730 Ahlen/Westfalen (DE)**

(74) Vertreter: **Schulze Horn, Hannes, Dr.-Ing., Im Defdahl 51, D-4600 Dortmund 1 (DE)**

(54) **Vorrichtung und Verfahren zur Zerkleinerung von Pflanzengut.**

(57) Die Erfindung betrifft eine Vorrichtung und ein Verfahren zum Zerkleinern von Pflanzengut, insbesondere von feuchtem Pflanzengut, z. B. zur Erzeugung von Corn Cob Mix. Die Vorrichtung umfasst ein Gehäuse und einen darin drehbeweglich gelagerten, mit einem Antrieb versehenen Rotor und ist dadurch gekennzeichnet dass die Vorrichtung ein mit bewegten und feststehenden, miteinander zusammenwirkenden Messern ausgestatteter Schneidapparat ist wobei die bewegten Messer in Bewegungsrichtung des Rotors rückwärts geneigt sind.

Die Messer sind aus Stahlblech vorzugsweise durch Ausstanzen hergestellte Formteile und besitzen eine Dicke von 0,3 bis 3 mm, vorzugsweise von 0,5 bis 1 mm. Die Zerkleinerung erfolgt auf die Weise, dass das Pflanzengut zwischen einer Vielzahl sich auf einer Kreisbahn bewegenden inneren Schneiden hoher Geschwindigkeit ungleichförmig beschleunigt und vorzerkleinert und von einer Vielzahl äusserer feststehender Schneiden fertigzerkleinert wird.

EP 0 124 137 A2

Kat/84/2

0124137

Beschreibung

Die Erfindung betrifft eine Vorrichtung sowie ein Verfahren zum Zerkleinern von Planzengut, insbesondere von feuchtem Pflanzengut, z.B. zur Erzeugung von Corn Cob Mix.

Hierbei handelt es sich um ein im zerkleinerten Zustand zähes, zur Klumpenbildung neigendes Gut, welches infolge seiner hohen Feuchtigkeits- und Eiweißgehalte eine klebrige Masse bildet, die bei der maschinellen Zerkleinerung große Schwierigkeiten bereitet.

Corn Cob Mix enthält vor der eigentlichen Reife geernteten, gemahlenen und/oder geschroteten Mais, dessen Kolben- und Pflanzensubstanz als Ganzes zerkleinert wird, und welcher gegebenenfalls während bzw. nach der Zerkleinerung durch Zusatz von Getreide, Eiweiß-Konzentrat und gegebenenfalls Mineralstoffen zu einem hochwertigen Tierfutter aufbereitet wird.

Für die Mischung ist es von Bedeutung, eine vollkommene Homogenität zu erreichen, da sonst einige Futterempfänger bestimmte Stoffe in zu geringer Konzentration, andere in zu hoher Konzentration bekämen. Aus diesem Grunde muß das Pflanzengut sehr fein zerkleinert werden.

Es ist als Stand der Technik bekannt, zur Zerkleinerung von Pflanzengut für Corn Cob Mix schnellaufende Hammermühlen mit bzw. ohne Bodenrost zu verwenden. Wegen der zu Verklebungen und Anbackungen neigenden Eigenschaften des Pflanzengutes ergeben sich hierbei beachtliche Schwierigkeiten. Zu deren Überwindung müssen relativ schwere und aufwendige Maschineneinheiten mit im Verhältnis zur Zerkleinerungsarbeit extrem hohen Antriebsleistungen verwendet werden. Da das Pflanzengut im Zustand des höchsten Eiweißgehaltes vor dem Reifezeitpunkt am

0124137

schwierigsten zu verarbeiten ist, wurde vielfach zur Überwindung der maschinellen Schwierigkeiten Pflanzengut mit auf Kosten des Eiweißgehaltes weiter fortgeschrittenem Reifegrad verarbeitet.

Ein besonderer Nachteil der bisher verwendeten Mühlen ergibt sich durch Verkleben bzw. Zusetzen der Siebe oder Bodenroste. Hierdurch wird der ohnehin sehr hohe Kraftbedarf der Hammermühlen bei schlechter werdender Zerkleinerungsleistung weiter erhöht. Auch steigt dieser weiter progressiv an, wenn infolge unvermeidlichen Verschleißes die Schlagkanten der Schlagleisten bzw. der Schlegel und/oder der Roststäbe stumpf werden.

Der Erfindung liegt die Aufgabe zugrunde, die bei der Zerkleinerung von feuchtem Pflanzengut auftretenden Schwierigkeiten zu überwinden und ein Verfahren anzugeben bzw. eine hierfür optimal geeignete Vorrichtung, welche es gestattet, das Planzengut mit erheblich verringerter Antriebsleitung und ohne Beeinträchtigung durch dessen klumpende und klebende Eigenschaften in gewünschtem Maße zu zerkleinern. Die Vorrichtung soll unkompliziert sein und eine transportable bzw. mobile Maschineneinheit bilden, die sich zum Anbau an und/oder Antrieb durch ein landwirtschaftliches Fahr- bzw. Zugmobil eignet. Auch sollen Schnittleistung und Kraftbedarf der Vorrichtung für längere Betriebszeiten ohne nachteilige Veränderungen verfügbar sein.

Die Lösung der Aufgabe gelingt erfindungsgemäß durch eine Vorrichtung, die ein mit bewegten und feststehenden, miteinander zusammenwirkenden Messern ausgestatteter Schneidapparat ist, wobei die bewegten Messer an Außenflächen des Rotors und die feststehenden Messer an Innenflächen des Gehäuses angeordnet sind. Mit Vorteil ergibt sich durch Einsatz eines Schneidapparates anstelle von Hammer- oder Prallhammermühlen durch das Zusammenwirken bewegter und feststehender Messer ein reiner Schneidvorgang, welcher durch klebende oder klumpende Eigenschaften des Gutes nicht beeinträchtigt wird, und bei dem auch unter ungünstigsten Zerkleinerungsverhältnissen der gewünschte Zerkleinerungsgrad mit im Verhältnis zu Hammermühlen signifikant verringerter Antriebsleistung erreicht wird.

In Ausgestaltung der Vorrichtung sind die bewegten Messer in Bewegungsrichtung des Rotors rückwärts geneigt, wobei ihre Schneiden tangentiale Linien an einen imaginären zur Rotationsachse konzentrischen Kreis bilden. Das Pflanzengut kann somit Vorteil im Zustand seines höchsten Eiweißgehaltes, so feucht und klebrig wie es ist, ohne Schwierigkeiten verarbeitet werden. Es kommt mit Vorteil hinzu, daß der verwendete Schneidapparat ein wesentlich geringeres Gewicht aufweist, als eine wuchtig und schwer ausgebildete Hammermühle, weswegen sich die erfindungsgemäße Vorrichtung als transportable bzw. mobile Maschineneinheit zum Anbau an ein landwirtschaftliches Fahrzeug eignet.

Erfindungsgemäß wird ein Schneidvorgang erzielt, der demjenigen einer Schere entspricht, wodurch mit Vorteil einerseits eine optimale Schneidwirkung mit geringstem Leistungsbedarf erhalten und andererseits höchstmögliche Standzeiten der Messer erreicht werden. Dabei hat es sich als vorteilhaft herausgestellt, daß der Winkel zwischen bewegten und feststehenden Messern zwischen 5° und 30°, vorzugsweise zwischen 7° und 15° beträgt.

In weiterer Ausgestaltung ist die Teilung der feststehenden Schneiden ein gebrochenes Vielfaches der Teilung der bewegten Messer. Die Anordnung vermeidet den gleichzeitigen Schnitt aller Messer. Die Zerkleinerung erfolgt vorteilhaft stetig. Das Antriebsmoment der Vorrichtung bleibt angenähert gleichförmig.

Weiter wird erfindungsgemäß vorgeschlagen, daß die Messer aus kaltverfestigtem Stahlblech, vorzugsweise durch Ausstanzen, hergestellte Formteile sind. Die auf diese Weise hergestellten Messer sind in großen Stückzahlen mit relativ geringen Kosten herstellbar, besitzen ohne jede Nachbehandlung die benötigten Schneidkanten und ergeben im Betrieb hervorragende Standzeiten.

Mit Vorteil besitzen die Messer die Form eines länglichen Rechtecks mit einem am Befestigungsende vorzugsweise rechteckigen Vorsprung. Dieser dient zur Sicherung mittels einer hintergreifenden Sicherungsleiste im eingebauten Zustand.

Vorteilhaft lassen sich mehrere hintereinanderliegende Messer zu einem gezahnten Kreisbogensegment integriert ausbilden. Durch damit erreichte kurze Messerwechselzeiten erhöht sich die Verfügbarkeit der Vorrichtung.

Vorzugsweise haben die Messer eine Dicke von 0,3 bis 3 mm, vorzugsweise von 0,5 bis 1 mm. Mit derart dünnen Messern werden vorteilhaft hervorragende Schnittleistungen bei geringstem Kraftbedarf des Schneideapparates erzielt. Darüberhinaus besitzen die Messer einerseits eine Elastizität, um gegebenenfalls einem Fremdkörper nachgeben zu können, andererseits eine für die vorgesehene Aufgabe ausreichende Stabilität. Die dünnen Messer werden im Betrieb nicht stumpf, sie sind überaus vorteilhaft selbstschärfend, da ihre Breite einer Anschliffkante entspricht. So bleiben Schnittleistung und Energiebedarf der Vorrichtung über längere Betriebszeiten unverändert erhalten, was gegenüber bekannten Hammermühlen ein großer Vorteil ist.

Ein weiterer wesentlicher Vorteil, insbesondere bezüglich der Herstellungskosten, wird auch dadurch erzielt, daß Form und Abmessungen der bewegten und der feststehenden Messer gleich sind. Hierin wird eine erfindungswesentliche Ausgestaltung des Schneidapparates gesehen.

In weiterer Ausgestaltung ist vorgesehen, daß die beweglichen und die feststehenden Messer in zum Rotor achsparallelen Reihen nebeneinander, sowie in zu mehreren untereinander parallelen Reihen paketweise angeordnet sind.

Dabei entspricht der Zwischenraum zwischen jeweils zwei bewegten oder feststehenden Messern einer Reihe dem doppelten bis annähernd dem vierfachen der Dicke eines Messers.

Ein sehr zweckmäßiger und für Herstellung, Montage sowie Austausch verschlissener Messer vorteilhafter Aufbau des Rotors ergibt sich dadurch, daß dessen Körper Distanzscheiben besitzt, die zwischen tragenden Speichenrädern des Rotors zusammengespannt sind und daß die Messer zwischen Flächen der Distanzscheiben eingespannt sind.

Zur Sicherung der Messer ist in einer zweckmäßigen Ausgestaltung weiter vorgesehen, daß die Messer in radialer Richtung durch zur Welle achsparallele, die hinteren Vorsprünge hintergreifende Sicherungs-Leisten gesichert sind.

Zweckmäßige Abmessungen des Rotors ergeben sich mit Durchmessern zwischen 50 bis 150 cm, vorzugsweise von 80 bis 120 cm; bei einer Breite von 10 bis 50 cm, vorzugsweise 20 bis 30 cm.

Weitere zweckmäßige Ausgestaltungen sehen vor, daß an der Oberseite des Gehäuses ein Einfüllschacht vorgesehen ist, der vorzugsweise einen rechteckigen Querschnitt aufweist, sowie ein Auswurfschacht mit vertikaler Achse, bzw. mit einer Neigung zu dieser.

Weiter ist aus Gründen der Sicherheit in dem zum Rotor tangentialen Wandbereich des Einfüllschachtes eine nach außen gegen eine federnde Rückstellkraft öffenbare Sicherungsklappe vorgesehen. Diese schützt den Schneidapparat vor Überlastung durch unzerkleinerbare oder zu große Teile im Aufgabegut.

Eine sehr zweckmäßige Fertigung des Gehäuses ergibt sich dadurch, daß mindestens der mit Messern bestückte Teil des Gehäuses aus zur Achse des Rotors in senkrechten Ebenen geschichteten Distanzscheiben besteht, und daß die feststehenden Messer zwischen Flächen der Distanzscheiben eingespannt und durch achsparallele, die hinteren Vorsprünge der Messer hintergreifende Sicherungs-Leisten gesichert sind. Dabei ist weiter vorgesehen, daß Wandbereiche des Gehäuses außerhalb des Bereiches der feststehenden Messer eine Fläche in gleichem Abstand zur Rotationsachse mit in geringem Abstand zu einem vom äußeren Durchmesser der Messer des Rotors beschriebenen imaginären Kreis bilden, die mit einem zu diesem Kreis tangentialen Wandteil in den Auswurfschacht übergeht.

Der Auswurfschacht kann in spitzem Winkel zur Vertikalen geneigt sein, wobei dieser Winkel zwischen 10° und 20°, vorzugsweise zwischen 12° und 17° beträgt.

In Ausgestaltung der Erfindung ist vorgesehen, daß die Vorrichtung nach der Erfindung zu einer transportablen bzw. mobilen Maschineneinheit ausgebildet ist und insbesondere Einrichtungen zum Anbau an landwirtschaftliche Fahrzeuge bzw. Zugmaschinen besitzt.

Das Verfahren, nachdem die Vorrichtung arbeitet, sieht vor, daß das Pflanzengut zwischen einer Vielzahl sich auf einer Kreisbahn bewegenden inneren Schneiden hoher Geschwindigkeit ungleichförmig beschleunigt und vorzerkleinert und von einer Vielzahl äußerer feststehender
Schneiden fertigzerkleinert wird. Das zu zerkleinernde
Pflanzengut wird durch, vorzugsweise auf einem Kreisbogen
bewegten Schneiden zunächst unter Gegenhaltung durch eine
Wand vorzerkleinert und beschleunigt bis es in einem
Labyrinth von gegeneinander bewegten Schneiden fertigzerkleinert wird. Die scherende Beanspruchungsart, die die
Schneiden auf das Pflanzengut ausüben, führt zu einem sehr
homogenen Zerkleinerungsergebnis bei geringem
Energieaufwand.

In Ausgestaltung des Verfahrens wird das Pflanzengut
während seines Weges durch eine Vielzahl angenähert radial
ausgerichteter kreisbogenförmig bewegter Schneiden mehrfach
beschleunigt und von ebenfalls angenähert radial
ausgerichteten, feststehenden Schneiden mehrfach verzögert.
Die auf das Pflanzengut ausgeübten Verzögerungs- und
Beschleunigungskräfte fördern das Gut durch das Labyrinth
der sich mit hoher Geschwindigkeit relativ zueinander
bewegenden Messer. Es brauchen deshalb keinerlei weitere
Förderverfahren des Zerkleinerungsgutes zur Anwendung
gebracht werden. Es handelt sich dabei um eine sehr
wirkungsvolle und einfache Art des sonst sehr schwer zu
fördernden breiigen und klebrigen Pflanzengutes.

Während der Beschleunigungs- und Verzögerungsmomente auf
das Pflanzengut ist weiter vorgesehen, daß die
Zerkleinerung desselben durch von Massenträgheit
induzierten Scherkräften zwischen Schneiden und Pflanzengut
erfolgt. Es treten folglich vorteilhaft als Reibpartner
während des Zerkleinerungsprozesses nur das Pflanzengut und
die Messer auf. Das Verfahren erlaubt deshalb, die Messer
selbst zueinander auf gewissem Abstand anzuordnen. Die
Scherkräfte treten infolge der eigenen Massenträgheit des
Pflanzengutes an den Schneidkanten auf, wenn das
Pflanzengut von den Schneiden verzögert oder beschleunigt
wird.

Eine Ausgestaltung des Verfahrens sieht vor, daß die zerkleinernden Scherkräfte durch sich in geringem Abstand voneinander in radialen Ebenen gegenläufig überlappend bewegenden Schneiden in das Pflanzengut eingeleitet werden. Dies erlaubt vorteilhaft die Schnittgeschwindigkeit der Messer herabzusetzen und so den Energiebedarf des Verfahrens an die Leistungkurve der antreibenden Kraftmaschine anzupassen. Als weiterer Vorteil ist hierbei der Selbstreinigungsmechanismus des Schneidapparates zu sehen.

Die Ausgestaltung des Verfahrens sieht weiter vor, daß das Pflanzengut auf einem kreisbogenförmigen Weg während eines einzigen Durchlaufs fertigzerkleinert wird. Der definierte Weg, auf dem das Pflanzengut fertigzerkleinert wird, verhindert, daß das Zerkleinerungsgut für unbestimmte Zeit mehrfach dem Zerkleinerungsprozeß unterworfen wird. Die Homogenität des Zerkleinerungsergebnisses wird vorteilhaft eingeengt.

In weiterer Ausgestaltung erfolgt der Austrag des zerkleinerten Pflanzenguts durch Massenträgheit pneumatisch im Freiflug. Hiermit wird vorteilhaft erreicht, daß das zerkleinerte Gut auch weiter pneumatisch direkt in Aufbewahrungsbehälter befördert werden kann.

Wesentlich leichter und gleichförmiger erfolgt die Zerkleinerung dadurch, daß das Pflanzengut in einem sich kreisbogenförmig verengenden Anfangsspalt vorzerkleinert wird.

Als besonders vorteilhaft hat sich bei der Anwendung des Verfahrens herausgestellt, wenn die Schneiden mit einer Relativgeschwindigkeit zwischen 50 bis 150 m/sec., vorzugsweise zwischen 80 bis 120 m/sec., gegeneinander bewegt werden. In dem Bereich dieses Verfahrensparameters wird eine besonders homogene Zerkleinerung bei gutem Wirkungsgrad erreicht.

Kal/84/2

0124137

Der gute Wirkungsgrad erlaubt es, daß als Antriebsaggregat für die Zerkleinerung das Nebenabtriebsaggregat eines Ackerschleppers oder Mähdreschers verwendet wird. Das Leistungsangebot dieser Aggregate entspricht vorteilhaft dem Leistungsbedarf des Zerkleinerungsverfahrens und eröffnet somit die Möglichkeit, das Verfahren auch mobil einzusetzen, z.B. direkt am Ernteort. Der Raumbedarf für den weiteren Transport des zerkleinerten Gutes wird im Vergleich zu dem Raumbedarf des Erntegutes verringert.

Die Erfindung wird in Zeichnungen in einer bevorzugten Ausführungsform gezeigt, wobei aus den Zeichnungen weitere vorteilhafte Einzelheiten der Erfindung entnehmbar sind.

Die Zeichnungen zeigen im einzelnen:

Fig. 1      eine Vorrichtung in Seitenansicht, teils im Schnitt, in schematisierter Darstellung,

Fig. 2      eine Vorrichtung gemäß Fig. 1 im Schnitt entsprechend einer zur Seitenansicht senkrechten Ebene gemäß Schnittlinie I-I in Fig. 1,

Fig. 3      ein gezahntes Kreissegment als Seitenansicht,

Fig. 4      einen Schnitt durch einen Teil des Rotors sowie der zugeordneten Gehäusewand gemäß Schnittlinie IV-IV in Fig. 1, mit auf Abstand stehenden Messern,

Fig. 5      einen Schnitt durch einen Teil des Rotors sowie der zugeordneten Gehäusewand gemäß Schnittlinie

0124137

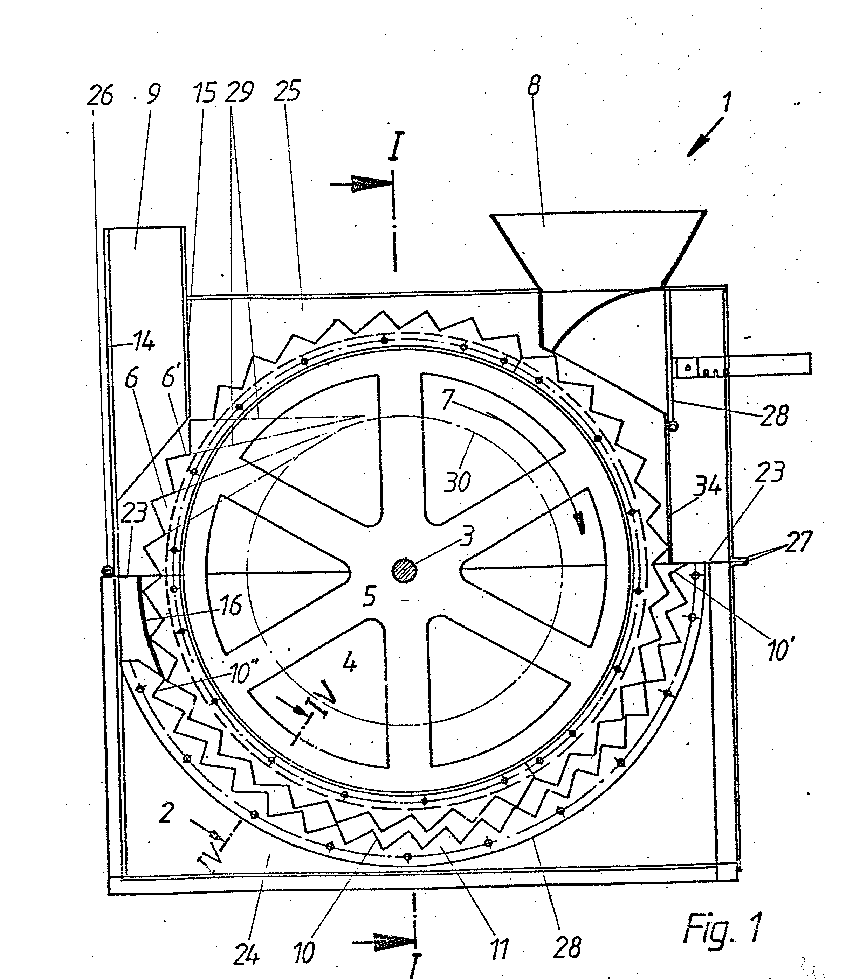

IV - IV in Fig. 1, mit überdeckenden Messern,

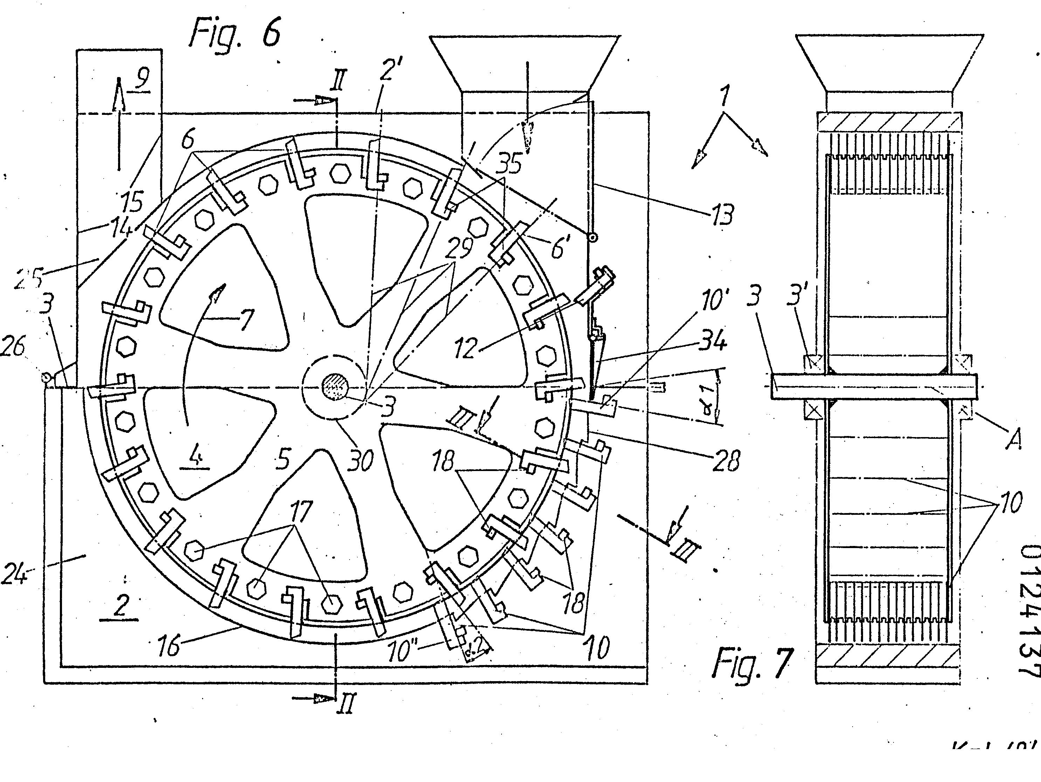

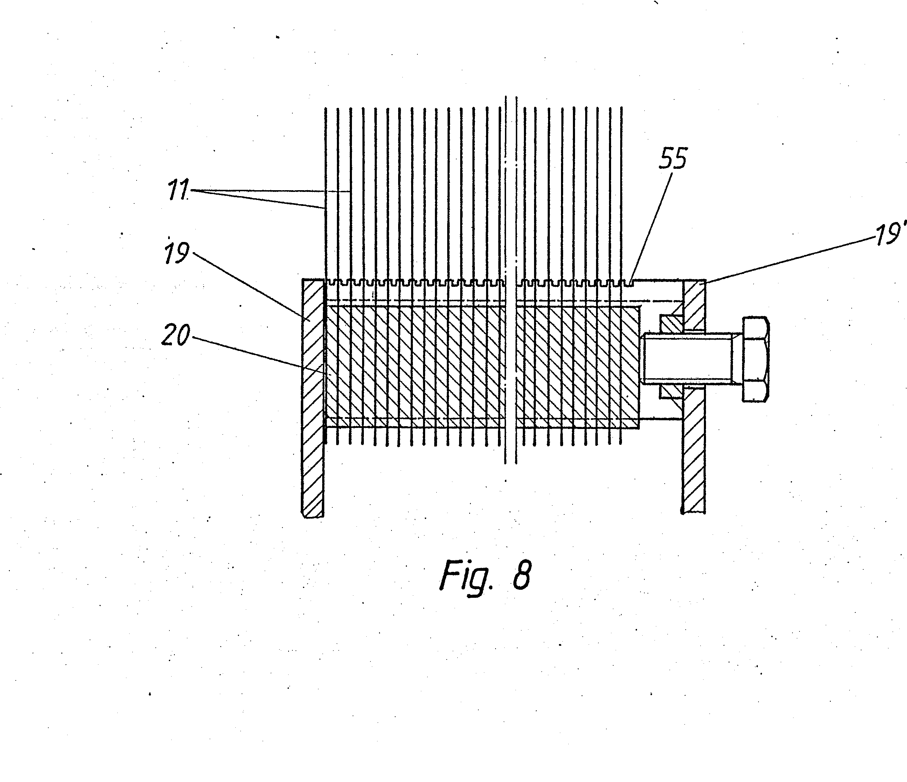

Fig. 6    eine Vorrichtung in Seitenansicht, teils im Schnitt, in schematisierter Darstellung, mit Einzelmessern,

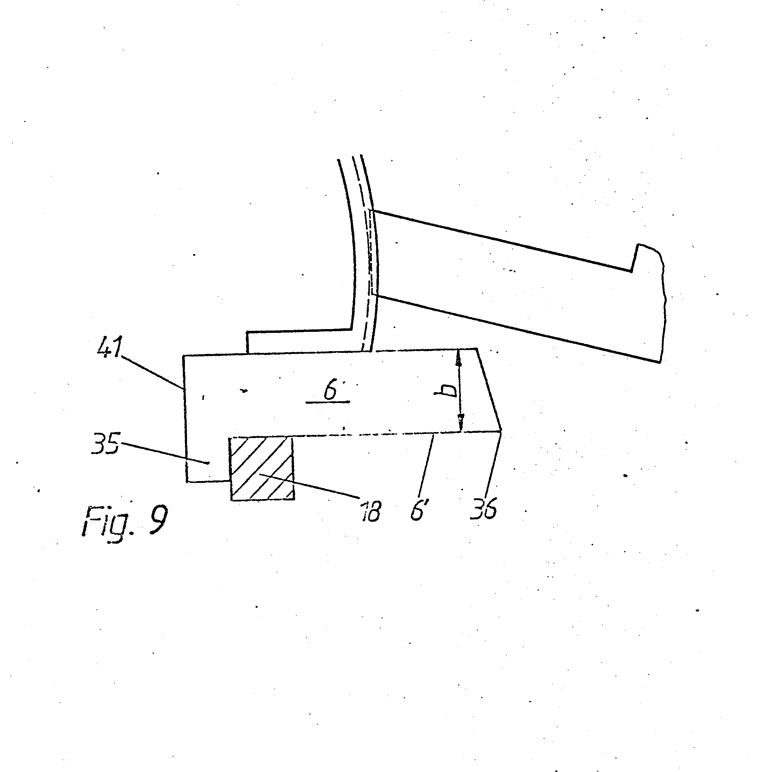

Fig. 7    eine Vorrichtung gemäß Fig. 6 im Schnitt entsprechend einer zur Seitenansicht senkrechten Ebene gemäß Schnittlinie II - II in Fig. 6,

Fig. 8    einen Schnitt durch einen Teil des Rotors und

Fig. 9    eine Zusammenstellung der Messer in Seitenansicht aus einer Vorrichtung gemäß Fig. 6.

Die Vorrichtung 1 gemäß Figur 1 und als Variante gemäß Fig. 6 umfaßt ein Gehäuse 2, in welchem eine Welle 3 in Lagerungen 3' mit horizontaler Rotationsachse A gelagert ist. Die Welle 3 steht mit einem (nicht dargestellten) Antrieb in Verbindung. Weiter umfaßt die Vorrichtung den Rotor 4, der mittels Speichenrädern 5 konzentrisch um die Welle 3 angeordnet und drehschlüssig mit dieser verbunden ist. An seinem Umfang ist der Rotor 4 mit Messern 6 bestückt, die in der Folge als "bewegliche Messer" 6 bezeichnet werden. Diese bewegen sich mit dem Rotor 4 in Drehrichtung gemäß Pfeil 7. Den Messern 6 entgegengerichtet sind im Bereich der gemäß Fig. 1 rechtsseitigen Innenwand 28 des Gehäuses 2 über den Bereich der vertikalen Projektion des Einfüllschachtes 8 hinaus halbkreisförmig feststehende Messer 11 angeordnet. Im vertikalen Wandbereich erfolgt oberhalb der feststehenden Messer 11 durch die Messer 6 im sich verengenden Spalt eine Vorzerkleine-

Kal/8472

0124137

rung, ggf. unter Mitwirkung weiter feststehender Messer 11 aus Fig. 6. Diese dient der Vorzerkleinerung gröberen Gutes, bevor dieses in den eigentlichen Schnittbereich der Messer 6 im Zusammenwirken mit den feststehenden Messern 11 gelangt. Diese Vorzerkleinerung ist wichtig und vorteilhaft, weil dadurch eine gleichmäßige und stoßfreie Zerkleinerung des vorzerkleinerten Gutes zwischen den Messerpaketen erfolgen kann. Die feststehenden Messer 11 sind im übrigen ebenso wie die Messer 6 in zur Rotationsachse A parallelen Reihen 10, 10', 10" angeordnet. Die Anfangsreihe ist mit 10' bezeichnet. Die Endreihe ist mit 10" bezeichnet. Von dort setzt sich in Drehrichtung 7 eine innere Gehäusewand 16 fort, welche in gleichem Radius-Abstand zur Rotationsachse A und in geringem Abstand zu einem vom äußeren Durchmesser der Messer 6 beschriebenen imaginären Kreis verläuft. Diese Wandfläche 16 geht tangential in den, durch Wandbereich 14 zusammmen mit dem gegenüberliegenden Wandbereich 15 gebildeten, Auswurfschacht 9 über.

Für eine optimale Schneidwirkung ist die Stellung der beweglichen 6 und feststehenden Messer 11 zueinander von erfindungswesentlicher Bedeutung. Dabei sind die feststehenden Messer 6 in Bewegungsrichtung 7 derart rückwärts geneigt, daß ihre Schneidkanten 6' tangentiale Linien 29 an einen zur Rotationsachse A konzentrischen, imaginären Kreis 30 bilden.

Die Schneidkanten der feststehenden Messer 11 mit den Schneidkanten 6' der bewegten Messer 6 bilden Winkel in Fig. 6 zwischen $\alpha_1$ mit etwa 30° und $\alpha_2$ mit etwa 7° bilden.

Damit ergibt sich ein Zusammenwirken dieser Schneidkanten zu einer Schneidfunktion wie bei einer Schere.

Kal/84/2

Die sich hieraus ergebenden Vorteile, sowohl für die Schneidwirkung selbst, als auch für die Standzeiten der Schneiden, sind wesentlich für die erfindungsgemäße Vorrichtung. Sie haben zur Folge, daß der Leistungsbedarf der Vorrichtung bezogen auf gleiche Zerkleinerungs-Qualität und -Menge den beim Stand der Technik verwendeten Mühlen um ein Vielfaches überlegen ist.

Bei der in Fig. 1 und 6 in Seitenansicht sowie in rein schematischer Darstellung gezeigten Vorrichtung ist der Auswurfschacht 9 mit vertikaler Achse angeordnet. Er kann jedoch auch in zweckmäßiger Abwandlung mit einer Neigung im spitzen Winkel nach auswärts gegenüber der Vertikalen angeordnet sein.

Ferner ist das Gehäuse 2 an der horizontalen Trennebene 23 in einen unteren Gehäusebereich 24 und einen oberen Gehäusebereich 25 geteilt. Diese sind durch ein Scharnier 26 miteinander schwenkbeweglich verbunden und mit den Flanschen 27 ringsum gegeneinander abdichtend gehalten. Nach Lösen einiger (nicht dargestellter) Schrauben kann beispielsweise zu Reinigungs- und/oder Revisionszwecken der obere Gehäusebereich 25 aufgeklappt oder eine nicht gezeichnete Revisionsklappe unterhalb des Gehäuses geöffnet werden. Dabei liegt dann das Innere der Vorrichtung 1 größtenteils frei und kann nachgesehen werden.

Außerdem wird in Fig. 6 eine Sicherungsklappe 34 gezeigt, die in dem zum Rotor tangentialen Wandbereich des Einfüllschachtes, z.B. bei versehentlich mitgeführten Steinen, gegen eine federnde Rückstellkraft öffnet und so den Schneidapparat vor Überlastung schützt.

Die weitere Klappe 13, die ebenfalls im Bereich des Einfüllschachtes angeordnet ist, erlaubt es, wenn der Schneidapparat verstopft ist, nach manuellem Einklappen in den Schacht, mechanisch zugeführtes Pflanzengut an dem Schneidapparat vorbei zu leiten.

Kal/84/2

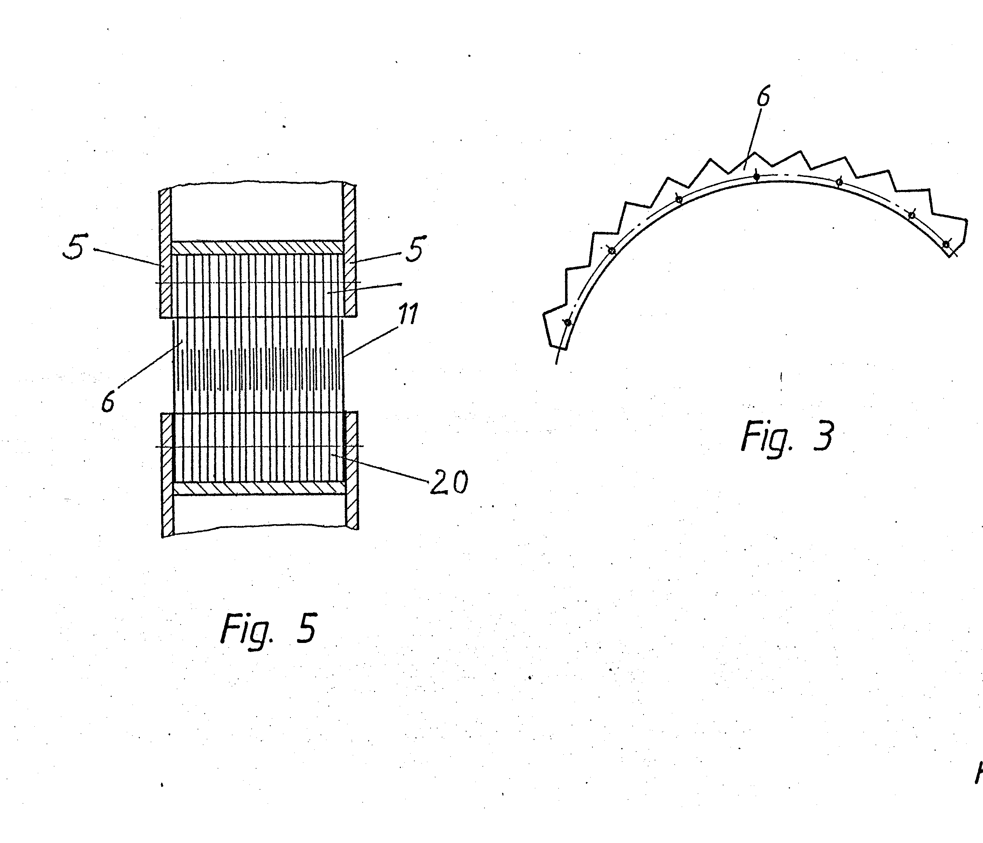

Aus der Darstellung ist ferner die Bauart des Rotors 4 erkennbar, der zwei von der Welle 3 zentriert aufgenommene Speichenräder 5 umfaßt, zwischen denen Distanzscheiben 20 (Fig. 5) angeordnet sind. Die bewegten Messer sind fest zwischen den Speichenrädern 5 und Distanzscheiben 20 gespannt.

Zur Sicherung der Position sind bei einer Ausführung mit Einzelmessern Sicherungsleisten 18 durch entsprechende Ausnehmungen in den peripheren Bereichen des Rotors 4 eingeschoben, die die Vorsprünge 35 (siehe Fig. 9) hintergreifen und auf diese Weise die Messer 6 sicher halten, wie dies insbesondere aus der Fig. 6 ebenfalls deutlich erkennbar ist.

Vorteilhaft lassen sich aber auch mehrere Einzelmesser zu gezahnten Kreisbogensegmenten zusammenfassen, das beispielhaft in Fig. 3 gezeigt ist.

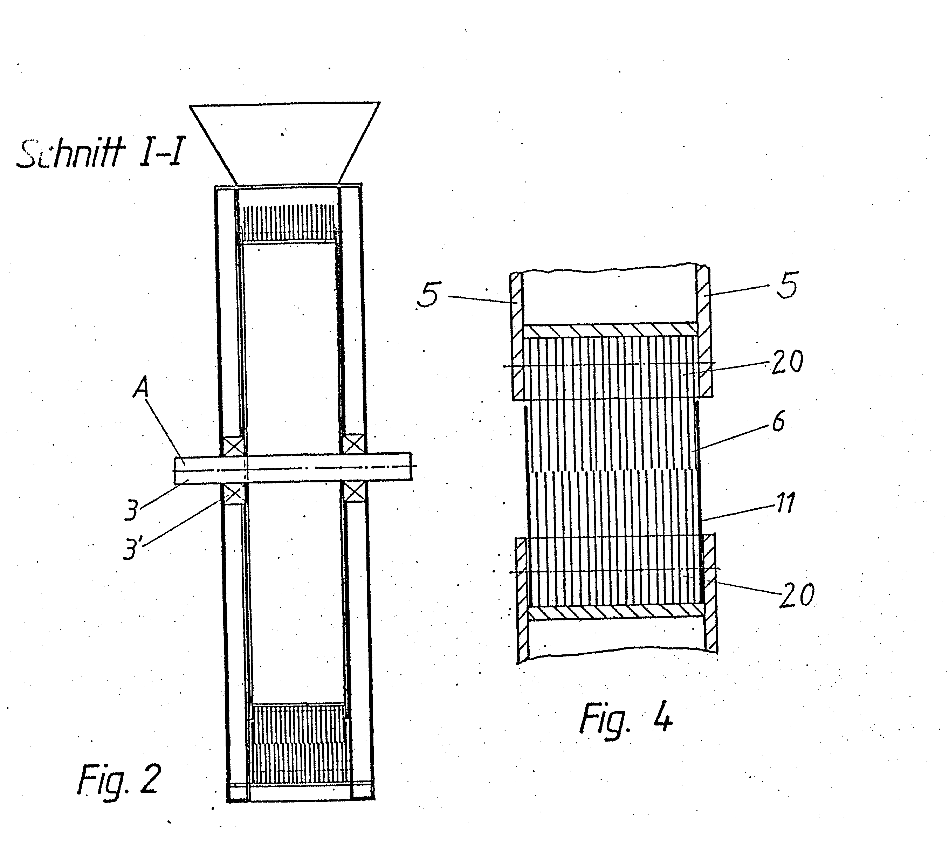

Einen Schnitt entsprechend der Schnittebene I-I in Fig. 1 zeigt Fig. 2, während Fig. 7 einen gleichgearteten Schnitt entsprechend Linie II-II aus Fig. 6 zeigt. Darin sind gleiche Elemente mit gleichen Bezugszeichen kenntlich gemacht. Die Darstellungen, Fig. 2 und Fig. 7, welche lediglich zur Veranschaulichung der Breitenverhältnisse der Vorrichtung 1 dienen, bedürfen im übrigen keiner weiteren Erläuterung. Der in Fig. 1 und Fig. 6 von der Seite und in Fig. 2 und Fig. 7 von der Schmalseite gezeigte Rotor 4 hat bei einem praktischen Ausführungsbeispiel einen Durchmesser von 120 cm von Messerspitze zu Messerspitze und eine Breite von 25 cm. Als Antrieb dient ein Motor von 40 KW, die Umfangsgeschwindigkeit der bewegten Messer 6 beträgt 85 m/sec.

Verschiedene vorteilhafte Anordnungen der an der Peripherie des Rotors 4 eingespannten Messer 6 zeigen in anschaulicher Weise Fig. 4 und 5. Aus den Darstellungen ist auch die

Kar/8472

0124137

Anordnung der Gegenmesser 11 erkennbar. Es handelt sich bei dieser Darstellung um einen Schnitt entsprechend der Schnittlinie IV-IV in Fig. 1.

In Fig. 8 sind von der Vorrichtung 1 die äußeren Seitenwände 19,19' des Gehäuses 2 zu erkennen. Der gezeigte Gehäusebereich ist ähnlich dem Rotor 4 mit Distanzscheiben 20 ausgestattet, welche mittels Schrauben zusammengspannt sind.

Zwischen den Distanzscheiben sind die feststehenden Messer 11 eingespannt. Aus der Darstellung ist ferner erkennbar, daß die Gegenmesser bei einer kammartigen Anordnung der feststehenden Messer 11 und der bewegten Messer 6 vorteilhaft in Rillen 55 geführt werden. So wird ein Berühren der Messer sicher vermieden.

Fig. 9 zeigt Form und Abmessungen eines Messers 6, das als Einzelmesser ausgebildet ist, in etwa natürlicher Größe. Dagegen zeigt Fig. 3 ein gezahntes Kreisbogensegment, bei dem mehrere Einzelmesser zu einem Stanzteil zusammengefaßt sind.

Die Messer sind als Stanzteil aus 0,8 mm kaltverfestigtem Stahlblech in einem Arbeitsgang ohne Nachbearbeitung hergestellt. Weil die Messer vom Grundmaterial her eine Dicke aufweisen, die einer Anschliffkante bei Messern für landwirtschaftliche Maschinen entspricht, können sie auch im rauhen Betrieb niemals stumpf werden. Die Abmessungen eines Einzelmessers aus Fig. 9 betragen von der Hinterkante 41 bis zur Messerspitze 36 beispielsweise ca. 100 mm, die Breite "b" z.B. 25 mm, die Dicke 0,8 mm. Der Vorsprung 35 wird im eingebauten Zustand von der Sicherungsleiste 18 hintergriffen und sichert - wie vorgängig mehrfach erwähnt - das Messer 6 bzw. 11 in seiner eingespannten Lage.

Die Messer sind als Stanzteil aus 0,8 mm kaltverfestigtem

Kal/84/2

Stahlblech in einem Arbeitsgang ohne Nachbearbeitung hergestellt. Weil die Messer vom Grundmaterial her eine Dicke aufweisen, die einer Anschliffkante bei Messern für landwirtschaftliche Maschinen entspricht, können sie auch im rauhen Betrieb niemals stumpf werden. Die Abmessungen eines Einzelmessers aus Fig. 9 betragen von der Hinterkante 41 bis zur Messerspitze 36 beispielsweise ca. 100 mm, die Breite "b" z.B. 25 mm, die Dicke 0,8 mm. Der Vorsprung 35 wird im eingebauten Zustand von der Sicherungsleiste 18 hintergriffen und sichert – wie vorgängig mehrfach erwähnt – das Messer 6 bzw. 11 in seiner eingespannten Lage.

Anlage zum Patentgesuch                          Kal/84/2
von Klemens Kalverkamp
4730 Ahlen/Westf

<u>Vorrichtung und Verfahren zur</u>
<u>Zerkleinerung von Pflanzengut</u>

<u>Patentansprüche</u>

1. Vorrichtung zum Zerkleinern von Pflanzengut,
   insbesondere feuchtem Pflanzengut, z.B. zur Erzeugung
   von Corn Cob Mix, umfassend ein Gehäuse und einen
   darin drehbeweglich gelagerten, mit einem Antrieb
   versehenen Rotor, d a d u r c h  g e k e n n -
   z e i c h n e t, daß die Vorrichtung (1) ein mit
   bewegten (6) und feststehenden (11), miteinander
   zusammenwirkenden Messern (6,11) ausgestatteter
   Schneidapparat ist, wobei die bewegten Messer (6) an
   Außenflächen des Rotors (4) und die feststehenden
   Messer (11) an Innenflächen des Gehäuses (2)
   angeordnet sind.

0124137

2. Vorrichtung nach Anspruch 1, d a d u r c h g e - k e n n z e i c h n e t, daß die bewegten Messer (6) in Bewegungsrichtung (7) des Rotors (4) rückwärts geneigt sind, wobei ihre Schneiden (6') tangentiale Linien (29) an einen imaginären, zur Rotationsachse (A) konzentrischen Kreis (30) bilden.

3. Vorrichtung nach Anspruch 1 oder 2, d a d u r c h g e k e n n z e i c h n e t, daß die Schneiden (6') der bewegten (6) und der feststehenden Messer (11) in einer scherenförmigen Winkelstellung zueinander angeordnet sind, wobei der Winkel zwischen 5° und 30°, vorzugsweise zwischen 7° und 15° beträgt.

4. Vorrichtung nach Anspruch 1, 2 oder 3 d a d u r c h g e k e n n z e i c h n e t, daß die Messer (6, 11) aus kaltverfestigtem Stahlblech, vorzugsweise durch Ausstanzen, hergestellte Formteile sind.

5. Vorrichtung nach Anspruch 1, 2, 3 oder 4, d a - d u r c h g e k e n n z e i c h n e t, daß die Messer (6,11) die Form eines länglichen Rechtecks mit einem am Befestigungsende (41) vorzugsweise rechteckigen Vorsprung (35) aufweisen.

6. Vorrichtung nach Anspruch 1, 2, 3, 4 oder 5, d a - d u r c h g e k e n n z e i c h n e t, daß die Messer (6, 11) eine Dicke von 0,3 bis 3 mm, vorzugsweise von 0,5 bis 1 mm besitzen.

7. Vorrichtung nach Anspruch 1, 2, 3, 4, 5 oder 6, d a - d u r c h g e k e n n z e i c h n e t, daß Form und Abmessungen der bewegten (6) und der feststehenden Messer (11) gleich sind.

Kal/84/2

0124137

8. Vorrichtung nach Anspruch 1, 2, 3, 4, 5, 6 oder 7, d a d u r c h   g e k e n n z e i c h n e t, daß die bewegten (6) und die feststehenden Messer (11) in zum Rotor (4) achsparallelen Reihen (10,10') nebeneinander, sowie in zu mehreren untereinander parallelen Reihen (10,10') paketweise angeordnet sind.

9. Vorrichtung nach Anspruch 1, 2, 3, 4, 5, 6, 7 oder 8, d a d u r c h   g e k e n n z e i c h n e t, daß der Zwischenraum zwischen jeweils zwei bewegten (6) oder feststehenden Messern (11) einer Reihe (10,10') dem doppelten bis annähernd dem vierfachen der Dicke eines Messers entspricht.

10. Vorrichtung nach Anspruch 1, 2, 3, 4, 5, 6, 7, 8 oder 9, d a d u r c h   g e k e n n z e i c h n e t, daß der Körper des Rotors (4) Distanzscheiben (20) besitzt, die zwischen tragenden Speichenrädern (5) des Rotors (4) zusammengespannt sind und daß die Messer (6) zwischen Flächen der Distanzscheiben (20) eingespannt sind.

11. Vorrichtung nach Anspruch 1, 2, 3, 4, 5, 6, 7, 8, 9 oder 10, d a d u r c h   g e k e n n z e i c h n e t, daß die Messer (6) in radialer Richtung durch zur Welle (3) achsparallele, die hinteren Vorsprünge (35) der Messer (6) hintergreifende, Sicherungs-Leisten (18) gesichert sind.

12. Vorrichtung nach Anspruch 1, 2, 3, 4, 5, 6, 7, 8, 9, 10 oder 11, d a d u r c h   g e k e n n z e i c h n e t, daß der Rotor (4) einen Durchmesser von 50 cm bis 150 cm, vorzugsweise von 80 cm bis 120 cm, aufweist.

13. Vorrichtung nach Anspruch 1, 2, 3, 4, 5, 6, 7, 8, 9, 10, 11 oder 12, d a d u r c h  g e k e n n z e i c h n e t, daß der Rotor (4) eine Breite von 10 cm bis 50 cm, vorzugsweise 20 cm bis 30 cm, aufweist.

14. Vorrichtung nach Anspruch 1, 2, 3, 4, 5, 6, 7, 8, 9, 10, 11, 12 oder 13, d a d u r c h  g e k e n n z e i c h n e t, daß an der Oberseite (2') des Gehäuses (2) ein Einfüllschacht (8) vorgesehen ist, der vorzugsweise einen rechteckigen Querschnitt aufweist.

15. Vorrichtung nach Anspruch 1, 2, 3, 4, 5, 6, 7, 8, 9, 10, 11, 12, 13 oder 14, d a d u r c h  g e k e n n z e i c h n e t  daß an der Oberseite (2') des Gehäuses (2) ein Auswurfschacht (9) vorgesehen und mit vertikaler Achse bzw. mit einer Neigung zur vertikalen Achse angeordnet ist.

16. Vorrichtung nach Anspruch 1, 2, 3, 4, 5, 6, 7, 8, 9, 10, 11, 12, 13, 14 oder 15, d a d u r c h  g e - k e n n z e i c h n e t, daß im Wandbereich (28) des Gehäuses (2) unterhalb des Einfüllschachtes (8) feststehende Messer (12) größerer Neigung angeordnet sind.

17. Vorrichtung nach Anspruch 1, 2, 3, 4, 5, 6, 7, 8, 9, 10, 11, 12, 13, 14, 16 oder 17, d a d u r c h  g e - k e n n z e i c h n e t, daß unten in dem zum Rotor (4) tangentialen Wandbereich des Einfüllschachtes (8) eine nach außen gegen eine federnde Rückstellkraft öffenbare Sicherungsklappe (34) vorgesehen ist.

18. Vorrichtung nach Anspruch 1, 2, 3, 4, 5, 6, 7, 8, 9, 10, 11, 12, 13, 14, 15, 16 oder 17, d a d u r c h  g e k e n n z e i c h n e t, daß mindestens der mit Messern (11) bestückte Bereich (28), des Gehäuses (2)

0124137

aus zur Achse (A) des Rotors (4) in senkrechten Ebenen geschichteten Distanzscheiben (20) besteht, und daß die festehenden Messer (11) zwischen Flächen der Distanzscheiben (20) eingespannt und durch zur Achse parallele, die hinteren Vorsprünge (35) der Messer (11) hintergreifende Sicherungs-Leisten (18) gesichert sind.

19. Vorrichtung nach Anspruch 1, 2, 3, 4, 5, 6, 7, 8, 9, 10, 11, 12, 13, 14, 15, 16, 17 oder 18, d a d u r c h g e k e n n z e i c h n e t, daß Wandbereiche (16) des Gehäuses (2) außerhalb des Bereiches der feststehenden Messer (11) eine Fläche in gleichem Anstand zur Rotationsachse (A) mit in geringem Abstand zu einem vom äußeren Durchmesser der Messer (6) des Rotors (4) beschriebenen imaginären Kreis bilden, die mit einem zu diesem Kreis tangentialen Wandteil (14) in den Auswurfschacht (9) übergeht.

20. Vorrichtung nach Anspruch 19, d a d u r c h g e - k e n n z e i c h n e t, daß der Auswurfschacht (9) in spitzem Winkel zur Vertikalen geneigt angeordnet ist, wobei dieser Winkel zwischen 10° und 20°, vorzugsweise zwischen 12° und 17° beträgt.

21. Vorrichtung nach einem oder mehrerender vorhergehenden Ansprüche, d a d u r c h g e k e n n z e i c h n e t, daß sie zu einer transportablen bzw. mobilen Maschineneinheit ausgebildet ist und insbesondere Einrichtungen zum Anbau an landwirtschaftliche Fahrzeuge bzw. Zugmaschinen besitzt.

22. Verfahren zum Zerkleinern von Pflanzengut, insbesondere feuchtem Pflanzengut, z.B. zur Erzeugung von Corn Cob Mix nach einem oder mehreren der vorhergehenden Ansprüche, d a d u r c h g e k e n n - z e i c h n e t, daß das Pflanzengut zwischen einer Vielzahl sich auf einer Kreisbahn bewegenden inneren Schneiden hoher Geschwindigkeit ungleichförmig beschleunigt und vorzerkleinert und von einer Vielzahl äußerer feststehender Schneiden fertigzerkleinert wird.

23. Verfahren nach Anspruch 22, d a d u r c h   g e - k e n n z e i c h n e t, daß das Pflanzengut während seines Weges durch eine Vielzahl, angenähert radial ausgerichteter kreisbogenförmig bewegter Schneiden mehrfach beschleunigt und von ebenfalls angenähert radial ausgerichteten feststehenden Schneiden mehrfach verzögert wird.

24. Verfahren nach Anspruch 22 oder 23, d a d u r c h   g e k e n n z e i c h n e t, daß die Zerkleinerung des Pflanzenguts durch von Massenträgheit induzierten Scherkräften zwischen Schneiden und Pflanzengut erfolgt.

25. Verfahren nach Anspruch 22, 23 oder 24, d a d u r c h   g e k e n n z e i c h n e t, daß die zerkleinernden Scherkräfte durch sich in geringem Abstand voneinander in radialen Ebenen gegenläufig überlappend bewegenden Schneiden in das Pflanzengut eingeleitet werden.

26. Verfahren nach Anspruch 22, 23, 24 oder 25, d a - d u r c h   g e k e n n z e i c h n e t, daß das Pflanzengut auf einem kreisbogenförmigen Weg während eines einzigen Durchlaufs fertig zerkleinert wird.

27. Verfahren nach Anspruch 22, 23, 24, 25 oder 26, d a - d u r c h   g e k e n n z e i c h n e t, daß ein Austrag des zerkleinerten Pflanzenguts durch Massenträgheit pneumatisch im freien Flug erfolgt.

28. Verfahren nach Anspruch 22, 23, 24, 25, 26 oder 27, d a d u r c h   g e k e n n z e i c h n e t, daß das Pflanzengut in einem sich kreisbogenförmig verengenden Anfangsspalt vorzerkleinert wird.

29. Verfahren nach Anspruch 22, 23, 24, 25, 26, 27 oder 28, d a d u r c h   g e k e n n z e i c h n e t, daß die Schneiden mit einer Relativgeschwindigkeit zwischen 50 bis 150 m/sec., vorzugsweise zwischen 80 bis 120 m/sec., gegeneinander bewegt werden.

30. Verfahren nach Anspruch 22, 23, 24, 25, 26, 27, 28 oder 29, d a d u r c h   g e k e n n z e i c h n e t, daß als Antriebsaggregat für die Zerkleinerung das Nebenabtriebsaggregat eines Ackerschleppers oder Mähdreschers verwendet wird.

- Beschreibung -

Fig. 1

Schnitt I–I

Fig. 2

Fig. 4

0124137

Kal/84/1

Fig. 5

Fig. 3

Fig. 6

Fig. 7

0124137

Fig. 8

0124137

Kal /84/1

0124137

Fig. 9

Kal /84/1